# EUROPÄISCHE PATENTANMELDUNG

(11) **EP 1 818 359 A1**
(43) Veröffentlichungstag der Anmeldung: **15.08.2007**
(21) Anmeldenummer: 07001944.3
(22) Anmeldetag: 30.01.2007
(51) Int. Cl.: C08K 3/00, C08L 83/04, C04B 35/565, C04B 35/638, C04B 35/634, C04B 35/14, C08K 3/22, C08K 3/14, C08K 3/36, C08K 7/10

(54) **Hitze- und Feuerisoliermaterial**

(30) Priorität: 14.02.2006 DE 102006006941
(71) Anmelder: BRANDENBURGER ISOLIERTECHNIK GMBH & Co., 76829 Landau/pfalz (DE)
(72) Erfinder: Hüls, Adrian, Dipl.-Ing., 76131 Karlsruhe (DE)
(74) Vertreter: Kesselhut, Wolf

(57) **Zusammenfassung**

Die Erfindung betrifft eine Zusammensetzung für hochtemperaturfeste, pyrolytisch keramisierende Beschichtungen und Formteile aus einer Matrix aus einem Silikonharz, Siliciumdioxid, Siliciumcarbid, Fasern und einem hochdispersen Melalloxid, vorzugsweise Siliciumdioxids, das eine mit der Silikonmatrix verträgliche Oberflächenbeschichtung aufweist.

## Beschreibung

Die Erfindung betrifft eine Zusammensetzung für hochtemperaturfeste, pyrolytisch keramisierende Beschichtungen und Formteile mit einer Matrix aus einem Silikonharz und darin eingebetteten anorganischen Füllstoffen und Fasern.

In der Luft- und Raumfahrt werden Hitze- und Feuerisoliermaterialien auf Basis von Silikonharzen, amorphem Siliciumdioxid, Siliciumcarbidpulver sowie Kohlenstoff- oder Silikatfasern verwendet. Derartige Zusammensetzungen sind beispielsweise in der US-A 3,623,904 und in der EP-A 733 547 beschrieben. Bei der Beflammung oder Einwirkung von heißen Gasen entstehen durch ablative Pyrolyse der polymeren Matrix feste, poröse keramische Isolierschichten, die auch bei Temperaturen von 3000 °C nicht schmelzen.

Die EP-A 878 520 beschreibt eine keramisierende Zusammensetzung aus

| | |
|---|---|
| A. | 40 bis 65 Masse% einer Polyurethan- oder Silikon- Elastomermatrix, |
| B. | 20 bis 50 Masse% amorphem Siliciumdioxid, |
| C. | 1 bis 8 Masse% Siliciumcarbidpulver, |
| D. | 0,5 bis 6 Masse% Kohlenstoff-, Keramik- oder Silikatfasern, sowie |
| E. | 0,5 bis 5 Masse% eines hochdispersen, hydrophilen Metalloxids aus der Gruppe Siliciumdioxid, Titandioxid oder Zirkondioxid mit einer mittleren Korngröße von 0,01 bis 2,0 µm. |

Der Zusatz des hochdispersen Metalloxids soll eine niedrige Aufquellung bei der Pyrolyse bewirken. Titandioxid wird vorzugsweise in Mengen von 0,5 bis 3 Masse% eingesetzt, Zirkondioxid in Mengen von 1 bis 5 Masse%. Siliciumdioxid wird in den Beispielen in Mengen von 1,02 bzw. 1,13 Masse% verwendet. Größere Mengen an Metalloxiden können offenbar nicht eingearbeitet werden, weil sonst wahrscheinlich die Viskosität der Zusammensetzung zu hoch wird, so dass sie nicht mehr problemlos verarbeitet, z.B. gegossen oder gespritzt werden kann.

Es hat sich nun gezeigt, dass für manche Anwendungszwecke, insbesondere bei Silikonmatrices, die Aufquellung und damit die Abtragung des Materials bei der Pyrolyse immer noch zu stark ist.

Der Erfindung lag daher die Aufgabe zugrunde, die Zusammensetzungen nach EP-B 878 520 in dieser Hinsicht zu verbessern.

Es wurde nun gefunden, dass hochdisperse Metalloxide auch in Mengen von mehr als 2,5 Gew.%, insbesondere in Mengen von mehr als 5,5 Gew.% problemlos in die Zusammensetzung eingearbeitet werden können, wenn sie 0,5 bis 8 % einer Oberflächenbeschichtung aufweisen, die mit der Silikonharz- Matrix verträglich ist.

Gegenstand der Erfindung ist demzufolge eine Zusammensetzung für hochtemperaturfeste, pyrolytisch keramisierende Beschichtungen und Formkörper aus

| | |
|---|---|
| A. | 65 bis 30 Gew.% einer Polymermatrix auf Basis Dimethylsiloxan, |
| B. | 15 bis 50 Gew.% Siliciumdioxid mit einer mittleren Korngröße von 2 bis 50 µm, |
| C. | 1 bis 12 Gew.% Siliciumcarbid mit einer mittleren Korngröße von 1 bis 15 µm, |
| D. | 0,5 bis 10 Gew.% Kohlenstoff-, Keramik oder Silikatfasern mit einer mittleren Länge von 0,5 bis 12 mm, sowie |
| E. | 2,5 bis 25 Gew.% eines hochdispersen Metalloxids aus der Gruppe Silicium-, Titan- oder Zirkonoxid mit einer mittleren Korngröße von von 0,01 bis 2 µm, |

wobei die hochdispersen Metalloxide E 0,1 bis 8 Gew.%, vorzugsweise 0,2 bis 5 Gew.%, einer mit der Polymermatrix verträglichen Oberflächenbeschichtung aufweisen.

Die relativ hohen Mengen an hochdispersen Metalloxiden bewirken, dass die Aufquellung bei der Pyrolyse und dadurch der Materialabrieb geringer werden.

In der EP-B 978 128 ist eine keramisierende flammwidrige Zusammensetzung beschrieben, enthaltend
- ein siliciumorganisches Polymer,
- einen keramisierenden Füllstoff,
- eine mineralische Komponente, ausgewählt aus
   - einer Mischung von Glasfritten und alkaliarmen Gläsern und
   - einem kristallisierenden Passivierungsglas, sowie
- gegebenenfalls Silikat- oder Glasfasern.

Der keramisierende Füllstoff ist ein Oxid, vorzugsweise Aluminiumoxid, daneben ist auch Titandioxid genannt. Der Füllstoff kann Tenside als Benetzungsmittel enthalten, insbesondere Metallseifen. Diese sind jedoch mit Silikonharzen nicht verträglich.

Als Matrixharze A kommen sowohl elastomere als auch harte Silikonharze in Frage. Sie entstehen bei der Härtung von Vinylgruppen enthaltenden Dimethylsiloxan-Prepolymeren mit üblichen Silanhärtern, z.B. Organohydrogen- Polysiloxanen mit Eisenoxid- und/oder Platinkatalysatoren. Einzelheiten über diese Reaktion sind z.B. in der EP-A 733 547 und EP-A 878 520 beschrieben.

Die Menge an Silikonharz in der Zusammensetzung beträgt 30 bis 65 Gew.%, vorzugsweise 40 bis 60 Gew.%.

Die Komponente B ist Siliciumdioxid, bevorzugt kristalliner Quarz, mit einer Korngröße von 2 bis 50 µm, vorzugsweise 3 bis 20 µm. In einer bevorzugten Ausführungsform der Erfindung ist auch dieses Siliciumdioxid mit einer Oberflächenbeschichtung in Mengen von 0,1 bis 8 Gew.% versehen. Entsprechende Produkte sind im Handel erhältlich. Wenn die Siliciumdioxide B und E beschichtet sind, erhält man eine bessere Anbindung der Füllstoffe an das Matrixharz und dadurch bessere mechanische Eigenschaften der aus der erfindungsgemäßen Zusammensetzung hergestellten Formteile und Beschichtungen. Die Komponente B ist in der Zusammensetzung in Mengen von 15 bis 50 Gew.%, vorzugsweise von 20 bis 40 Gew.% enthalten.

Die Komponente C ist Siliciumcarbidpulver mit einer mittleren Korngröße von 1 bis 15 µm, vorzugsweise von 1 bis 5 µm. Es ist in der Zusammensetzung in Mengen von 1 bis 12, vorzugsweise von 2 bis 10 Gew.% enthalten. Auch das Siliciumcarbid kann eine Oberflächenbeschichtung enthalten.

Komponente D sind Fasern, z.B. aus Keramik, Silikaten oder bevorzugt Kohlenstoff, mit einer Länge von 0,5 bis 12, vorzugsweise 1 bis 6 mm. Sie werden in Mengen von 0,5 bis 10, vorzugsweise von 1 bis 8 Gew.% eingesetzt.

Komponente E sind hochdisperse, beschichtete Metalloxide aus der Gruppe Titandioxid, Zirkondioxid und bevorzugt Siliciumdioxid mit mittleren Korngrößen von 0,01 bis 2 µm, vorzugsweise 0,02 bis 0,8 µm. Sie können aufgrund ihrer Beschichtung in relativ hohen Mengen von 2,5 bis 25 Gew.%, vorzugsweise von 5,5 bis 20 Gew.% eingesetzt werden, ohne dass die Viskosität der Zusammensetzung zu hoch wird. Erfindungsgemäß sind sie mit 0,1 bis 8 Gew.%, vorzugsweise von 0,2 bis 5 Gew,% einer Oberflächenbeschichtung, die mit der Polymermatrix verträglich ist, versehen. Als Oberflächenbeschichtung kommen vorzugsweise Silane, z.B. Trimethylsilan, Methylsilan und Epoxisilan in Frage.

Besonders bevorzugt ist hochdisperser, kristalliner Quarz bzw. Cristobalit mit einer Korngröße von 0,05 bis 0,8 µm und einer Oberfläche von 10 bis 80 m²/g, vorzugsweise von 12 bis 60 m²/g, der 0,2 bis 4 Gew.% der Oberflächenbeschichtung aufweist und der Zusammensetzung in Mengen von 5,5 bis 15 Gew.% zugesetzt wird. Die Korngröße wird durch feines Mahlen von Quarzsand eingestellt. Beschichtete hochdisperse Siliciumdioxide sind im Handel erhältlich.

Durch Zusatz von hochdispersem, beschichtetem Siliciumdioxids lässt sich die Aufquellung, d.h. die Dickenzunahme bei der Beflammung mit heißer Flamme von 3000 °C nach dem Beflammungsversuch nach ASTM- E 285-80 steuern. Zusätzlich wird der Aufbau einer festen Schicht, die sich schwer abtragen lässt, verbessert.

Zur Herstellung der erfindungsgemäßen Zusammensetzung dispergiert man in flüssigem Dimethylsiloxan- Prepolymeren das grobe Siliciumdioxid, das Siliciumcarbid und das beschichtete hochdisperse Siliciumdioxid und vermischt die Komponenten. Nach dem Zumischen des Silanhärters kann die fließfähige Mischung entweder auf Substrate, z.B. auf Metall- oder Keramikoberflächen, aufgetragen oder aufgespritzt werden oder in Formen gegossen werden. Die Aushärtung erfolgt bei Temperaturen von 50 bis 175 °C und dauert 2 bis 24 Stunden. Durch mehrstündiges Tempern bei 100 bis 175 °C kann die Festigkeit der keramischen Masse verbessert werden.

Die erfindungsgemäße Zusammensetzung kann zur Feuer- und Hitzeisolierung im Hochtemperaturbereich verwendet werden, beispielsweise im Bauten- und Geräteschutz, da das Material eine sehr geringe Rauchentwicklung hat, sowie als Schutzüberzüge für Metall- und Keramikteile, insbesondere in der Luft- und Raumfahrttechnik.

### Beispiel

In einem 5 I- Doppelmantelrührbehälter wurden in 434,8 g Dimethylsiloxan-Prepolymer nacheinander 244,4 g mit 0,45 % Trimethylsilan beschichteten kristallinen Quarz einer mittleren Korngröße von 4 µm, 77,2 g Siliciumcarbid einer mittleren Korngröße von 3 µm und 77,2 g feines, mit 0,45 % Trimethylsilan beschichteter Cristobalit mit einer mittleren Korngröße von 0,1 µm und einer Oberfläche von etwa 17 m²/g bei Drehzahlen bis 2000 UpM 30 min lang dispergiert. Anschließend wurden mit einem Ankerrührer 51,5 g Kohlefasern einer mittleren Länge von 6 µm mit 200 bis 500 UpM 15 min lang eingerührt und benetzt, so dass eine fließfähige Masse entstand. Unter Vakuum und unter Kühlung auf 15 °C wurde eine Mischung von 48,9 g eines üblichen Silanhärters und 1,8 g eines üblichen Silaninhibitors eingerührt. Nach 15 min war die Zusammensetzung zur Weiterverarbeitung fertig. Ihre Viskosität betrug etwa 200.000 mPas. Die Topfzeit bei Temperaturen unter 25 °C betrug mehrere Tage.
a. Die Zusammensetzung wurde in eine Form gegossen bzw. mit einem Kolben in eine evakuierte Form eingedrückt und jeweils bei einer Temperatur von 80 °C 14 Std lang zu einem Formteil ausgehärtet.
b. Die Zusammensetzung wurde auf eine Edelstahlplatte als Überzug mit einer Dicke von 12 mm aufgetragen und bei 80 °C 14 Std lang ausgehärtet. Der Beflammungstest, durchgeführt nach ASTM-E 285-80 60 sec lang bei 3000°C , ergab nur eine geringe Aufquellung, so dass auch nur wenig Material abgetragen wurde.

## Patentansprüche

1. Zusammensetzung für hochtemperaturfeste, pyrolytisch keramisierende Beschichtungen und Formteile aus
| | |
|---|---|
| A. | 65 bis 30 Gew.% einer Polymermatrix auf Basis Dimethylsiloxan, |
| B. | 15 bis 50 Gew.% Siliciumdioxid mit einer mittleren Korngröße von 2 bis 50 µm, |
| C. | 1 bis 12 Gew.% Siliciumcarbid mit einer mittleren Korngröße von 1 bis 15 µm, |
| D. | 0,5 bis 10 Gew.% Kohlenstoff-, Keramik- oder Silikatfasern mit einer mittleren Länge von 0,5 bis 12 mm, und |
| E. | 2,5 bis 25 Gew.% eines hochdispersen Metalloxids aus der Gruppe Siliciumdioxid, Titandioxid und Zirkondioxid mit einer mittleren Korngröße von 0,01 bis 2 µm, |
wobei sich die Prozentzahlen auf 100 addieren,
**dadurch gekennzeichnet, dass** die hochdispersen Metalloxide E 0,1 bis 8 Gew.% einer mit der Polymermatrix verträglichen Oberflächen-beschichtung aufweisen.

2. Zusammensetzung nach Anspruch 1, **gekennzeichnet durch** einen Gehalt von 5,5 bis 20 Gew.% des hochdispersen Metalloxids E.

3. Zusammensetzung nach Anspruch 1, **dadurch gekennzeichnet, dass** das hochdisperse Metalloxid E Siliciumdioxid mit einer mittleren Korngröße von 0,02 bis 0.8 µm ist, das 0,2 bis 4 Gew.% einer Oberflächenbeschichtung aufweist und zu 5,5 bis 15 Gew.% in der Zusammensetzung enthalten ist.

4. Zusammensetzung nach Anspruch 3, **dadurch gekennzeichnet, dass** das Siliciumdioxid kristalliner Quarz bzw. Cristobalit mit einer Oberfläche von 10 bis 80 m²/g.

5. Zusammensetzung nach Anspruch 1, **dadurch gekennzeichnet, dass** auch das amorphe Siliciumdioxid der Komponente B beschichtet ist.

6. Zusammensetzung nach Anspruch 1, **dadurch gekennzeichnet, dass** auch das Siliciumcarbid der Komponente C beschichtet ist.

7. Zusammensetzung nach Anspruch 1, **dadurch gekennzeichnet, dass** die Oberflächenbeschichtung ein Silan, vorzugsweise Trimethylsilan, Methylsilan oder Epoxisilan ist.

8. Verwendung der Zusammensetzung nach Anspruch 1 zur Herstellung von hitze- und feuerbeständigen Überzügen und Formteilen.

9. Verwendung der Zusammensetzung nach Anspruch 1 zur Herstellung von Schutzüberzügen für Metall- und Keramikteile in der Luft- und RaumfahrtTechnik.
